# EUROPEAN PATENT APPLICATION

(11) **EP 2 990 214 A1**
(43) Date of publication of application: **02.03.2016**
(21) Application number: 13737638.0
(22) Date of filing: 25.04.2013
(51) Int. Cl.: B60B 7/00, B60B 7/06, B60B 7/04, B60B 7/02

(54) **HUB CAPS FOR VEHICLE WHEELS**

(71) Applicant: Zanini Auto Grup, S.A., 08150 Parets del Vallés - Barcelona (ES)
(72) Inventor: RUSSELL, Marty, E-08150 Parets del Vallès (Barcelona) (ES); DOMÍNGUEZ SANTALÓ, Guillem, E-08150 Parets del Vallès (Barcelona) (ES); MAYER PUJADAS, Augusto, E-08150 Parets del Vallès (Barcelona) (ES)
(74) Representative: Carpintero Lopez, Francisco
(86) International application number: PCT/ES2013/070267
(87) International publication number: WO 2014/174125

(57) **Abstract**

The present invention relates to a hubcap for vehicle wheels, comprising a plurality of sockets (4) for housing nuts (5) fixing a rim (10) to the wheel axle, and characterized in that it comprises a centering ring (3) provided with said plurality of sockets (4) which is attached to a substantially circular body (2), said centering ring (3) being made of a material different from the material of said substantially circular body (2).

It allows that only this centering ring is made of a more expensive material (that withstands high temperatures), whereas the rest of the hubcap can be made of a less expensive material.

## Description

The present invention relates to a hubcap for vehicle wheels which is used to cover the rims of the vehicle wheels.

### Background of the Invention

A problem with hubcaps currently used to cover the rims of vehicle wheels relates to the difficulty in correctly centering and fixing same with respect to the rim during placement. If this centering is not precise and shifts take place, these shifts are quite visible when the wheel turns due to the optical effect they produce. Furthermore, poor centering of the hubcap in the wheel further involves out-of-balance wheel problems.

On the other hand, accepted rim manufacturing tolerances have a negative influence when trying to fit the hubcap therein because the existing allowance sometimes means that the fitting does not take place with the firmness required to assure a stable fastening.

Furthermore, since the hubcap is currently located in the rim, problems resulting from the presence of the air valve stem to inflate the tire often occur.

Specifically, a problem of this type usually occurs if the hubcap can rotate once it is placed on the rim. This is a serious problem because said rotation can damage the air valve, possibly even breaking it in an extreme case, and thereby losing air from the tire.

Current fastening is often times rather ineffective, this being particularly noticeable when the hubcap rubs against sidewalk curbs. This contact often results in merely shifting the hubcap, but it can also cause the hubcap to fall off.

The anti-rotation hubcap described in patent application ES 2 224 805 A1, which belongs to the same proprietor of this application, was envisaged to solve these drawbacks.

The hubcap described in this document comprises a considerably circular body having a series of sockets in the rear face arranged in correspondence with the head of the screws responsible for fixing the rim to the wheel axle. Said sockets are provided with openings for introducing the heads of screws in the assembly position, determining the centering and locking of the hubcap against rotation with respect to the rim of the wheel. Furthermore, said sockets are attached to one another by means of a surrounding rib around the center of the hubcap to reinforce its geometry and prevent assembly in the wrong position.

The drawback of the hubcap described in this document, and generally of all hubcaps, is that that they must be made of a heat-resistant material because they have to withstand the heat generated by the vehicle brakes.

The heat generated by the brakes radiates through the wheel and the screws fixing the rim to the wheel axle. This heat can deform, or in extreme cases melt, the hubcap in the area where the rim touches the screws.

The use of such heat-resistant material for the hubcap increases its cost, which represents a drawback.

The need for a hubcap that withstands the heat produced by vehicle brakes and has a lower cost compared with conventional hubcaps is therefore evident.

### Description of the Invention

The aforementioned drawbacks are solved with the hubcap for vehicle wheels of the invention, having other advantages that will be described below.

The hubcap for vehicle wheels of the present invention comprises a plurality of sockets for housing nuts fixing a rim to the wheel axle and is characterized in that it comprises a centering ring provided with said plurality of sockets which is attached to a substantially circular body, said centering ring being made of a material different from the material of said substantially circular body.

Said centering ring is advantageously made of a material that is more resistant to high temperatures than the material of said substantially circular body.

Said centering ring also preferably comprises a plurality of retaining holes for housing complementary projections of said substantially circular body, and each of said retaining holes can comprise a retaining washer.

According to a preferred embodiment, said sockets comprise an inclined ridge which is inclined with respect to the inner wall of said sockets, facilitating the alignment of the nuts inside said sockets, and said inclined ridge can cover about half the periphery of each socket. Furthermore, said sockets preferably have an oblong plan view profile.

Said centering ring can be attached to said substantially circular body by means of fastenings, welding, screws, adhesives, pressure coupling or hot riveting, or by means of any type of suitable attachment.

According to a preferred embodiment, the material of said body is polypropylene and the material of the centering ring is a polyamide.

The hubcap for vehicle wheels of the present invention achieves the primary advantage that the presence of the centering ring and the different materials used for the ring and the rest of the hubcap enables making only this centering ring from a more expensive material (that withstands high temperatures), whereas the rest of the hubcap can be made of a less expensive material.

### Brief Description of the Drawings

To better understand the foregoing, drawings are attached in which a practical embodiment is schematically depicted only by way of non-limiting example.
Figure 1 is a perspective view of a hubcap for vehicle wheels of the present invention according to a first embodiment;
Figure 2 is a perspective view of the central part of said hubcap for vehicle wheels according to said first embodiment;
Figure 3 is a cross-section view of the hubcap for vehicle wheels of the present invention fixed to a rim; and
Figure 4 is a perspective view of the central part of said hubcap for vehicle wheels according to a second embodiment.

### Description of a Preferred Embodiment

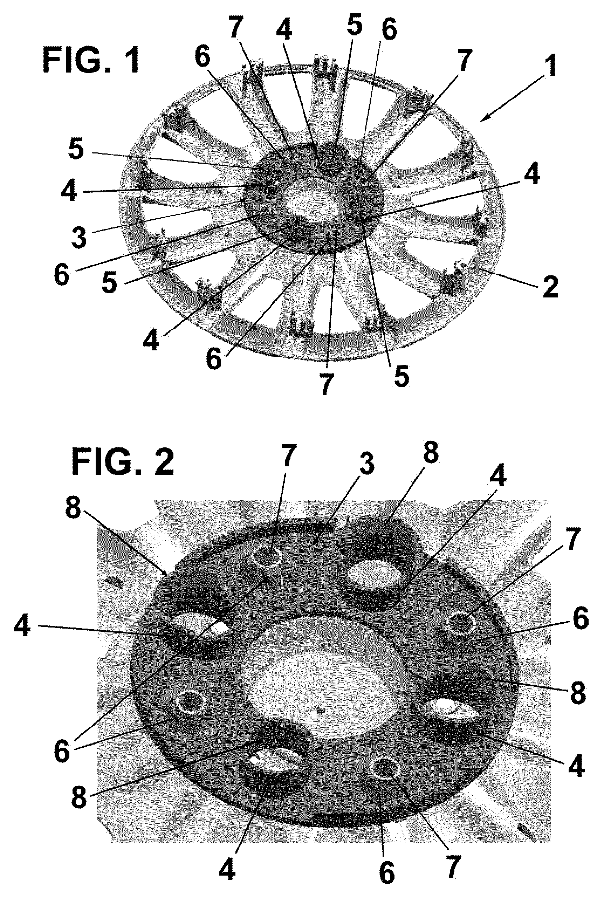

Figures 1 to 3 depict a first embodiment of the hubcap for vehicle wheels of the present invention, which is generally indicated by means of reference number 1.

Said hubcap 1 comprises a substantially circular body 2 made of a plastic material that has a lower cost, for example polypropylene, and a centering ring 3 made of another material, particularly a plastic material that is more resistant to high temperatures than the material of said body 2 is, for example a polyamide, which has a higher cost than the material of the body 2.

This centering ring 3 will withstand the heat produced by the brakes of the wheel where the hubcap of the present invention is assembled, and its dimensions allow manufacturing the rest of the hubcap using another less expensive material.

Said centering ring 3 comprises a plurality of sockets 4 in which nuts 5 will be housed for fixing a rim 10 that is fixed to the wheel axle.

According to the depicted embodiment, said sockets 4 are four in number and have an oblong plan view profile. Each socket 4 further comprises an inclined ridge 8 to facilitate aligning the nuts 5 therein.

The centering ring 3 also comprises a plurality of retaining holes 6, the purpose of which is to retain said substantially circular body 2. To that end, said holes 6 house projections 7 of said body 2. As can be seen in the drawings, said holes 6 are not planar but rather define walls or ridges.

The substantially circular body 2 and the centering ring 3 are attached to one another in any suitable manner, such as by means of fastenings, welding, screws, adhesives, pressure coupling or hot riveting, for example, or by other means.

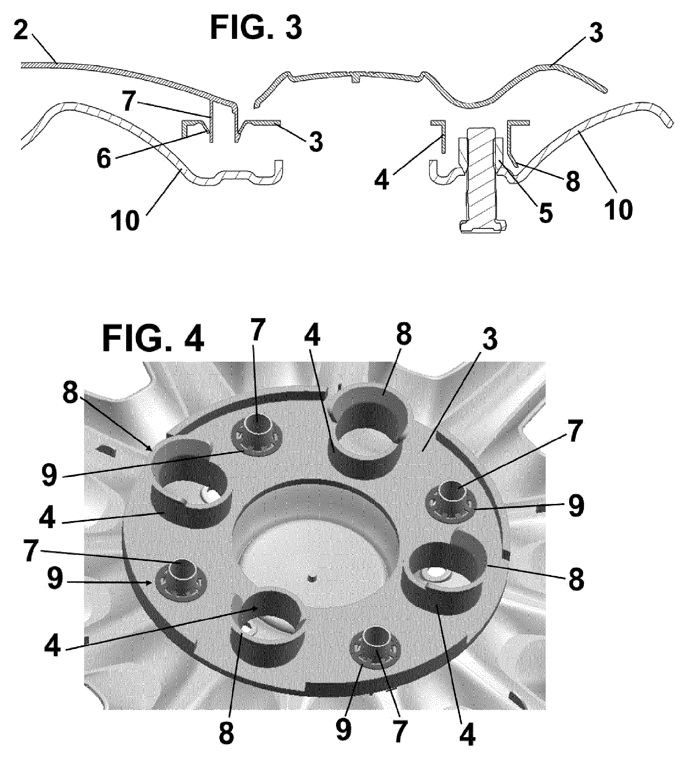

Figure 3 depicts a cross-section view of the rim 10 of the vehicle wheel and of the substantially circular body 2 and of the centering ring 3, where the coupling of the rim 10 and the centering ring 3 by means of the nuts 5, and the retention thereof to the body 2 by means of the holes 6 of the centering ring 3 can be seen.

Figure 4 depicts a second embodiment of the hubcap for vehicle wheels of the present invention. For the sake of simplicity, the same reference numbers are used to indicate equivalent elements in both embodiments.

It must be indicated that both embodiments are virtually identical with the exception of the inclusion of retaining washers 9, made of stainless steel for example, placed around said holes 6 of the centering ring 3. The function of these retaining washers 9 is to fix the centering ring 3 with the body 2.

Despite having referred to a specific embodiment of the invention, it is evident for a person skilled in the art that the described hubcap for vehicle wheels can be subject to a number of variations and modifications, and that all the mentioned details can be replaced with other technically equivalent details without departing from the scope of protection defined by the attached claims.

## Claims

1. Hubcap for vehicle wheels, comprising a plurality of sockets (4) for housing nuts (5) fixing a rim (10) to the wheel axle, **characterized in that** it comprises a centering ring (3) provided with said plurality of sockets (4) which is attached to a substantially circular body (2), said centering ring (3) being made of a material different from the material of said substantially circular body (2).

2. Hubcap for vehicle wheels according to claim 1, wherein said centering ring (3) is made of a material that is more resistant to high temperatures than the material of said substantially circular body (2).

3. Hubcap for vehicle wheels according to claim 1, wherein said centering ring (3) also comprises a plurality of retaining holes (6) for housing complementary projections (7) of said substantially circular body (2).

4. Hubcap for vehicle wheels according to claim 3, wherein each of said retaining holes (6) comprises a retaining washer (9) around it.

5. Hubcap for vehicle wheels according to claim 1, wherein said sockets (4) comprise an inclined ridge (8) which is inclined with respect to the inner wall of said sockets (4).

6. Hubcap for vehicle wheels according to claim 5, wherein said inclined ridge (8) covers about half the periphery of each socket (4).

7. Hubcap for vehicle wheels according to claim 1, wherein said sockets (4) have an oblong plan view profile.

8. Hubcap for vehicle wheels according to claim 1, wherein said centering ring (3) is attached to said substantially circular body (2) by means of fastenings, welding, screws, adhesives, pressure coupling or hot riveting.

9. Hubcap for vehicle wheels according to claim 1 or 2, wherein the material of said body (2) is polypropylene and the material of the centering ring (3) is a polyamide.
